# EUROPEAN PATENT SPECIFICATION

(11) **EP 4 410 796 B1**
(45) Date of publication and mention of the grant of the patent: **30.09.2026**
(21) Application number: 22875757.1
(22) Date of filing: 08.09.2022
(51) Int. Cl.: C08G 77/54, C07F 7/18

(54) **METHOD FOR PRODUCING ALKOXYSILYL ALKYLAMINOPROPYL-MODIFIED POLYSILOXANE COMPOUND**
VERFAHREN ZUR HERSTELLUNG EINER ALKOXYSILYLALKYLAMINOPROPYL-MODIFIZIERTEN POLYSILOXANVERBINDUNG
PROCÉDÉ DE PRODUCTION D'UN COMPOSÉ DE POLYSILOXANE MODIFIÉ PAR ALCOXYSILYLE ALKYLAMINOPROPYLE

(30) Priority: 29.09.2021 JP 2021158821
(43) Date of publication of application: 07.08.2024
(73) Proprietor: SHIN-ETSU CHEMICAL CO., LTD., Tokyo 1000005 (JP)
(72) Inventor: KAWAKAMI Masato, Joetsu-shi, Niigata 942-8601 (JP)
(74) Representative: Mewburn Ellis LLP
(86) International application number: PCT/JP2022/033655
(87) International publication number: WO 2023/053885

(56) References cited:
- JP-A- 2008 163 116
- JP-A- 2012 233 040
- JP-A- 2015 510 017
- JP-A- H01 193 276
- US-A- 4 981 988
- US-A1- 2012 277 370
- US-A1- 2021 079 257

## Description

### TECHNICAL FIELD

This invention relates to a method for producing an alkoxysilylalkylaminopropyl-modified polysiloxane compound.

### BACKGROUND ART

Aminoalkyl-modified polysiloxane compounds, which are referred to as "amino-modified silicones," hereinafter, find a variety of uses including resin modifiers, textile treating agents, cosmetic components, and paint additives where the reactivity of amino group is utilized.

Amino-modified silicones can be synthesized by a wide variety of methods.

For example, Patent Document 1 discloses a method of producing a both end amino-modified silicone by dealcoholization condensation of a both end silanol-modified polysiloxane compound with an aminoalkylalkoxysilane compound.

Also, by reacting an amino-modified silicone with a haloalkylalkoxysilane compound, an amino-modified silicone having an alkoxysilylalkyl group as a substituent on nitrogen is obtained.

For example, Patent Document 2 discloses a method of producing a both end alkoxysilylmethylaminopropyl-modified polysiloxane, which is a compound having an α-alkoxysilyl structure introduced as a substituent on nitrogen, by reacting a both end amino-modified silicone with chloromethyltriethoxysilane.

Further, Patent Document 3 discloses a method of producing an amino-modified silicone having an alkoxysilylalkyl group as a substituent on nitrogen by reacting an amino-modified silicone with 3-glycidyloxypropyltrimethoxysilane which is an alkoxysilane compound having an epoxy group.
Further, Patent document 4 discloses an alkoxysilylalkylaminopropyl-modified polysiloxane based on dehydrochlorination of a dimethylpolysiloxane having chlorine atoms at its terminals and an aminomethyltrialkoxysilane

Such an amino-modified silicone having an alkoxysilylalkyl group as a substituent on nitrogen can form a cured coating through hydrolytic condensation of its alkoxysilylalkyl group.

A coating can also be formed by co-hydrolytic condensation of the amino-modified silicone having an alkoxysilylalkyl group with a condensation curable silicone compound. Through this mechanism, water repellency and flexibility attributable to the polysiloxane site of the amino-modified silicone are imparted to the cured coating of condensation curable silicone compound.

Moreover, a polysiloxane-modified resin can be synthesized by mixing an amino-modified silicone having an alkoxysilylalkyl group with a resin having a functional group capable of reacting with an amino group. This modified resin is useful in that not only the properties attributable to the polysiloxane site, but also the adhesion-enhancing effect attributable to the alkoxysilyl group can be imparted thereto.

### PRIOR ART DOCUMENTS

### PATENT DOCUMENTS

Patent Document 1: JP-A 2001-011186
Patent Document 2: US 20170005436 A1
Patent Document 3: JP-A 2016-069390
Patent Document 4: US 2012/277370 A1

### SUMMARY OF INVENTION

### TECHNICAL PROBLEM

According to the method of Patent Document 1, an amino-modified silicone having an alkoxysilylalkyl group as a substituent on nitrogen may be produced by carrying out dealcoholization condensation of a silanol-modified polysiloxane compound with a bis(alkoxysilylalkyl)amine such as bis(trimethoxysilylpropyl)amine. This method, however, is difficult to advance selective condensation reaction with only one alkoxysilyl group of the bis(alkoxysilylalkyl)amine, with a possibility that both trialkoxysilyl groups of the bis(alkoxysilylalkyl)amine react with a silanol group of the silanol-modified polysiloxane compound. Although it is necessary to withdraw the alcohol formed with the progress of reaction, the alcohol cannot be fully withdrawn unless the temperature is elevated higher than the boiling point of the alcohol because the amount of alcohol formed is small relative to the weight of the reaction solution. There is left a problem that the product is readily colored.

In the method of Patent Document 2, since triethylamine hydrochloride forms with the progress of reaction, it is removed by filtration. However, some of triethylamine hydrochloride is dissolved in the target compound and contained as chloride ions. There is left a problem that the product is readily colored in the series of synthesis, isolation and storage steps.

Also, since the reaction of primary amino group of the both end amino-modified silicone with chloromethyltriethoxysilane takes place in an non-selective manner, the intramolecular amino group is available in admixture with not only the desired secondary amino group, alkoxysilylmethylaminopropyl group, but also a tertiary amino group, bis(alkoxysilylmethyl)aminopropyl group and a primary amino group, aminopropyl group. Of these groups, the bis(alkoxysilylmethyl)aminopropyl group which is a tertiary amino group possesses a hydrolyzable silyl group, but not an NH structure, failing to form a covalent bond with a reactive resin or the like. On the other hand, since the aminopropyl group which is a primary amino group does not possess an alkoxysilyl group, there is a possibility that curability is aggravated.

The method of producing a both end alkoxysilylalkylaminoalkyl-modified polysiloxane compound as described in Patent Document 3 eliminates the problem of chloride ions as in the method of Patent Document 2 because it relies on the ring-opening reaction of an epoxy group with an amino group. In the reaction of epoxy group with amino group, however, the epoxy group undergoes ring-opening to form a hydroxy group with the progress of reaction. The hydroxy group can undergo intermolecular or intramolecular condensation with the alkoxysilyl group from the alkoxysilane compound having an epoxy group to form a higher molecular weight compound. This leaves a possibility to form insolubles, inviting turbidity and aggravating storage stability.

Since the reaction of epoxy group with amino group takes place non-selectively like the reaction of Patent Document 2, the product is a mixture of compounds having primary, secondary and tertiary amino groups. A problem similar to Patent Document 2 remains unsolved.

An object of the invention, which has been made under the above-mentioned circumstances, is to provide a method of producing an alkoxysilylalkylaminoalkyl-modified polysiloxane compound with advantages including a sufficient conversion at low temperature within a short time, a low polymer content, satisfactory storage stability, and little coloration.

### SOLUTION TO PROBLEM

Making extensive investigations to attain the above object, the inventor has found that when a silanol-modified polysiloxane compound is reacted with a cyclic silazane compound having an alkoxysilyl group, selective reaction takes place between a silanol group of the silanol-modified polysiloxane compound and a cyclic silazane site of the cyclic silazane compound having an alkoxysilyl group. Thus an alkoxysilylalkylaminoalkyl-modified polysiloxane compound is produced without forming by-products. The invention is predicated on this finding.

The invention provides a method as defined below.
1. A method for producing an alkoxysilylalkylaminopropyl-modified polysiloxane compound, comprising the step of reacting a silanol-modified polysiloxane compound having the general formula (1): 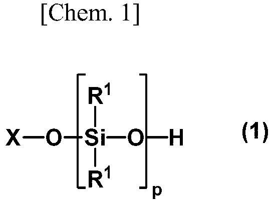 wherein R¹ is each independently a C₁-C₁₀ substituted or unsubstituted monovalent hydrocarbon group, X is hydrogen or R¹₃Si wherein R¹ is as defined above, and p is an integer of 1 to 1,000, with an alkoxysilyl-containing cyclic silazane compound having the general formula (2): 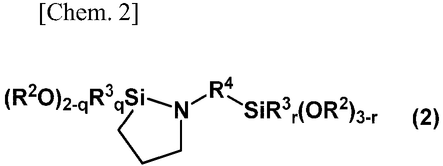 wherein R² and R³ are each independently a C₁-C₆ unsubstituted monovalent hydrocarbon group, R⁴ is a C₁-C₂₀ divalent hydrocarbon group which may contain sulfur, silicon, ester bond or urea bond, q is 0 or 1, and r is 0, 1 or 2,
   the alkoxysilylalkylaminopropyl-modified polysiloxane compound having the general formula (3): 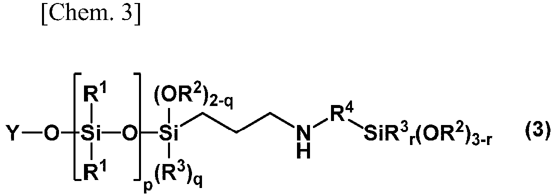 wherein R¹ to R⁴, p, q, and r are as defined above, and Y is a substituent group having the general formula (4): 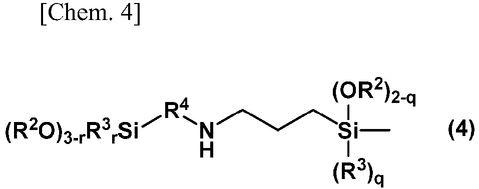 wherein R² to R⁴, q, and r are as defined above, or R¹₃Si wherein R¹ is as defined above.
2. The method for producing an alkoxysilylalkylaminopropyl-modified polysiloxane compound according to 1 wherein the silanol-modified polysiloxane compound having formula (1) and the alkoxysilyl-containing cyclic silazane compound having formula (2) are combined in such a ratio that 1.0 to 1.2 moles of the alkoxysilyl-containing cyclic silazane compound is present per mole of silanol group in the silanol-modified polysiloxane compound.

### ADVANTAGEOUS EFFECTS OF INVENTION

According to the invention, an alkoxysilylalkylaminopropyl-modified polysiloxane compound is readily produced because reaction takes place within a short time without forming by-products. The alkoxysilylalkylaminopropyl-modified polysiloxane compound of quality is obtained because reactants are not exposed to elevated temperature in the course.

Since the alkoxysilylalkylaminopropyl-modified polysiloxane compound, in principle, contains the amino group in its molecule which essentially possesses a NH structure and essentially has an alkoxysilylalkyl group, the reactivity of amino group and the effect of alkoxysilyl group are available.

### BRIEF DESCRIPTION OF DRAWINGS

[FIG. 1] FIG. 1 is a diagram showing the IR spectrum of 2,2-dimethoxy-N-(trimethoxysilyloctyl)-1-aza-2-silacyclopentane obtained in Synthesis Example 1.
[FIG. 2] FIG. 2 is a diagram showing the ¹H-NMR spectrum of 2,2-dimethoxy-N-(trimethoxysilyloctyl)-1-aza-2-silacyclopentane obtained in Synthesis Example 1.
[FIG. 3] FIG. 3 is a diagram showing the IR spectrum of 2-ethoxy-2-methyl-N-(triethoxysilyloctyl)-1-aza-2-silacyclopentane obtained in Synthesis Example 2.
[FIG. 4] FIG. 4 is a diagram showing the ¹H-NMR spectrum of 2-ethoxy-2-methyl-N-(triethoxysilyloctyl)-1-aza-2-silacyclopentane obtained in Synthesis Example 2.
[FIG. 5] FIG. 5 is a diagram showing the IR spectrum of 2-methoxy-2-methyl-N-(trimethoxysilylpropylthioethyl)-1-aza-2-silacyclopentane obtained in Synthesis Example 3.
[FIG. 6] FIG. 6 is a diagram showing the ¹H-NMR spectrum of 2-methoxy-2-methyl-N-(trimethoxysilylpropylthioethyl)-1-aza-2-silacyclopentane obtained in Synthesis Example 3.
[FIG. 7] FIG. 7 is a diagram showing the IR spectrum of 2,2-diethoxy-N-triethoxysilylmethyl-1-aza-2-silacyclopentane obtained in Synthesis Example 4.
[FIG. 8] FIG. 8 is a diagram showing the ¹H-NMR spectrum of 2,2-diethoxy-N-triethoxysilylmethyl-1-aza-2-silacyclopentane obtained in Synthesis Example 4.

### DESCRIPTION OF EMBODIMENTS

Now the invention is described in detail.

The invention provides a method for producing an alkoxysilylalkylaminopropyl-modified polysiloxane compound having the general formula (3), referred to as "Compound (3)", hereinafter, comprising the step of reacting a silanol-modified polysiloxane compound having the general formula (1), referred to as "Compound (1)", hereinafter, with an alkoxysilyl-containing cyclic silazane compound having the general formula (2), referred to as "Compound (2)", hereinafter.

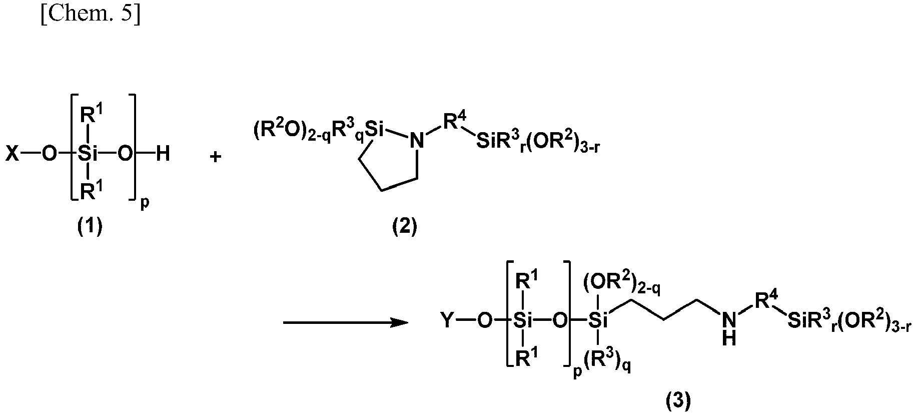

In formulae (1) and (3), R¹ is each independently a C₁-C₁₀, preferably C₁-C₆, more preferably C₁-C₃ substituted or unsubstituted monovalent hydrocarbon group.

The monovalent hydrocarbon group R¹ may be straight, branched or cyclic and examples thereof include straight alkyl groups such as methyl, ethyl, n-propyl, n-butyl, n-pentyl, n-hexyl, n-heptyl, n-octyl and decyl; branched alkyl groups such as isopropyl, isobutyl, sec-butyl, tert-butyl, neopentyl, thexyl and 2-ethylhexyl; cyclic alkyl groups such as cyclopentyl and cyclohexyl; alkenyl groups such as vinyl, allyl, propenyl, butenyl and pentenyl; aryl groups such as phenyl and tolyl; and aralkyl groups such as benzyl and phenethyl.

Of these, methyl, ethyl, n-propyl, vinyl and phenyl are preferred from the aspect of availability of reactants.

In the monovalent hydrocarbon group R¹, some or all of the hydrogen atoms may be substituted by fluorine or chlorine. Examples of the substituted monovalent hydrocarbon group include fluoroalkyl groups such as 3,3,3-trifluoropropyl and chloroalkyl groups such as chloromethyl and chloropropyl.

In formula (1), X is hydrogen or R¹₃Si- wherein R¹ is as defined above.

Examples of Compound (1) include 1-hydroxypolysiloxane compounds such as 1-hydroxy-1,1,3,3,5,5,7,7,7-nonamethyltetrasiloxane, 1-hydroxy-1,1,3,3,5,5,7,7-octamethyl-7-vinyltetrasiloxane, 1-hydroxy-1,1,3,3,5,5,7,7-octamethyl-7-chloromethyltetrasiloxane, 1-hydroxy-1,1,3,3,5,5,7,7-octamethyl-7-chloropropyltetrasiloxane, 1-hydroxy-1,1,3,3,5,5-hexavinyl-7,7,7-trimethyltetrasiloxane, 1-hydroxy-1,1,3,3,5,5-hexaphenyl-7,7,7-trimethyltetrasiloxane, 1-hydroxy-1,3,5-tris(3,3,3-trifluoropropyl)-1,3,5,7,7,7-hexamethyltetrasiloxane, 1-hydroxy-1,1,3,3,5,5,7-heptavinyl-7,7-dimethyltetrasiloxane, 1-hydroxy-1,1,3,3,5,5,7-heptamethyl-7,7-diphenyltetrasiloxane, 1-hydroxy-1,1,3,3,5,5,7,7-octaphenyl-7-methyltetrasiloxane, 1-hydroxy-1,1,3,3,5,5,7,7,7-nonaphenyltetrasiloxane, α-hydroxy-ω-methylpolydimethylpolysiloxane, α-hydroxy-ω-vinylpolydimethylpolysiloxane, α-hydroxy-ω-chloromethyldimethylpolysiloxane, α-hydroxy-ω-chloropropyldimethylpolysiloxane, and α-hydroxy-ω-phenyldimethylpolysiloxane; dihydroxypolysiloxane compounds such as 1,7-dihydroxy-1,1,3,3,5,5,7,7-octamethyltetrasiloxane, 1,7-dihydroxy-1,1,3,3,5,5,7-heptamethyl-7-vinyltetrasiloxane, 1,7-dihydroxy-1,3,5-tris(3,3,3-trifluoropropyl)-1,3,5,7,7-pentamethyltetrasiloxane, and α,ω-dihydroxydimethylpolysiloxane; and dialkylsilanediols such as dibutylsilanediol, diphenylsilanediol, and dicyclopentylsilanediol.

In formulae (2) and (3), R² and R³ are each independently a C₁-C₆, preferably C₁-C₃ unsubstituted monovalent hydrocarbon group.

The monovalent hydrocarbon groups R² and R³ may be straight, branched or cyclic and examples thereof include straight alkyl groups such as methyl, ethyl, n-propyl, n-butyl, n-pentyl and n-hexyl; branched alkyl groups such as isopropyl, isobutyl, sec-butyl and tert-butyl; cyclic alkyl groups such as cyclopentyl and cyclohexyl; alkenyl groups such as vinyl, allyl, propenyl, butenyl and pentenyl; and aryl groups such as phenyl.

Of these, methyl and ethyl are preferred from the aspect of availability of reactants.

R⁴ is a C₁-C₂₀, preferably C₁-C₁₀, more preferably C₁-C₆ divalent hydrocarbon group which may contain sulfur, silicon, ester bond or urea bond.

The divalent hydrocarbon group R⁴ may be straight, branched or cyclic and examples thereof include straight alkylene groups such as methylene, ethylene, trimethylene, tetramethylene, hexamethylene, octamethylene, and decylene; branched alkylene groups such as methylethylene and methyltrimethylene; cyclic alkylene groups such as cyclohexylene and methylenecyclohexylenemethylene; straight alkenylene groups such as propenylene, butenylene, hexenylene and octenylene; branched alkenylene groups such as isopropenylene and isobutenylene; arylene groups such as phenylene; and aralkylene groups such as methylenephenylene, methylenephenylenemethylene, and methylenephenyleneethylene.

Of these, straight alkylene groups are preferred, and C₁-C₆ straight alkylene groups are more preferred from the aspect of availability of reactants.

Examples of the sulfur-containing divalent hydrocarbon group R⁴ include thioalkylene and alkylenethioalkylene groups.

Examples of the silicon-containing divalent hydrocarbon group R⁴ include alkylenedialkylsilylalkylene and substituent groups having the general formula (5).

Examples of the alkylene group are as exemplified above, with C₁-C₆ straight alkylene groups being preferred.

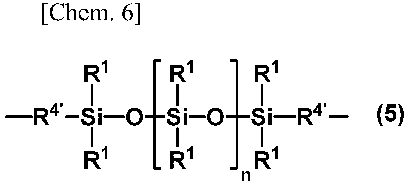

Herein R¹ is as defined above.

In formula (5), R^{4'} is each independently oxygen or a C₁-C₂₀, preferably C₁-C₁₀, more preferably C₁-C₆ divalent hydrocarbon group. The total number of carbon atoms in two R^{4'} is equal to that in R⁴. Examples of the divalent hydrocarbon group R^{4'} are as exemplified above for R⁴.

Examples of the ester bond-containing divalent hydrocarbon group R⁴ include substituent groups having the general formula (6). Examples of the urea bond-containing divalent hydrocarbon group R⁴ include substituent groups having the general formula (7).

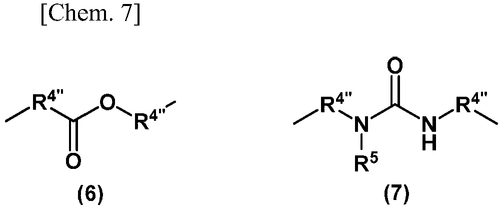

In formulae (6) and (7), R^{4"} is each independently a single bond or a C₁-C₁₀, preferably C₁-C₆, more preferably C₁-C₃ divalent hydrocarbon group. The total number of carbon atoms in two R^{4"} is equal to that in R⁴. Examples of the divalent hydrocarbon group R^{4"} are as exemplified above for R⁴, but of 1 to 10 carbon atoms.

In formula (7), R⁵ is hydrogen or a C₁-C₁₀, preferably C₁-C₆, more preferably C₁-C₃ unsubstituted monovalent hydrocarbon group. Examples of the monovalent hydrocarbon group R⁵ are as exemplified above for R¹. Hydrogen is preferred from the aspect of availability of reactants.

In formulae (2) and (3), q is 0 or 1, and r is 0, 1 or 2.

Examples of Compound (2) include
cyclic silazane compounds having a trialkoxysilylalkyl group such as 2,2-dimethoxy-N-(trimethoxysilylpropyl)-1-aza-2-silacyclopentane, 2,2-dimethoxy-N-(trimethoxysilylmethyl)-1-aza-2-silacyclopentane, 2,2-dimethoxy-N-(trimethoxysilylhexyl)-1-aza-2-silacyclopentane, 2,2-dimethoxy-N-(trimethoxysilyloctyl)-1-aza-2-silacyclopentane, 2-methoxy-2-methyl-N-(trimethoxysilylpropyl)-1-aza-2-silacyclopentane, 2-methoxy-2-methyl-N-(trimethoxysilylhexyl)-1-aza-2-silacyclopentane, 2-methoxy-2-methyl-N-(trimethoxysilyloctyl)-1-aza-2-silacyclopentane, 2,2-diethoxy-N-(triethoxysilylpropyl)-1-aza-2-silacyclopentane, 2,2-diethoxy-N-(triethoxysilylmethyl)-1-aza-2-silacyclopentane, 2,2-diethoxy-N-(triethoxysilylhexyl)-1-aza-2-silacyclopentane, 2,2-diethoxy-N-(triethoxysilyloctyl)-1-aza-2-silacyclopentane, 2-ethoxy-2-methyl-N-(triethoxysilylpropyl)-1-aza-2-silacyclopentane, 2-ethoxy-2-methyl-N-(triethoxysilylhexyl)-1-aza-2-silacyclopentane, 2-ethoxy-2-methyl-N-(triethoxysilyloctyl)-1-aza-2-silacyclopentane, 2,2-dimethoxy-N-(trimethoxysilylthiomethyl)-1-aza-2-silacyclopentane, 2-methoxy-2-methyl-N-(trimethoxysilylthiomethyl)-1-aza-2-silacyclopentane, 2,2-dimethoxy-N-(trimethoxysilylthiopropyl)-1-aza-2-silacyclopentane, 2-methoxy-2-methyl-N-(trimethoxysilylthiopropyl)-1-aza-2-silacyclopentane, 2,2-dimethoxy-N-[(trimethoxysilyl)ethyldimethylsiloxydimethylsilyl(methyl)propyl]-1-aza-2-silacyclopentane, 2-methoxy-2-methyl-N-[(trimethoxysilylethyldimethylsiloxy-dimethylsilyl(methyl)propyl]-1-aza-2-silacyclopentane, 2,2-dimethoxy-N-(3-trimethoxysilylpropoxycarbonylethyl)-1-aza-2-silacyclopentane, 2,2-diethoxy-N-(3-triethoxysilylpropoxycarbonylethyl)-1-aza-2-silacyclopentane, 2,2-dimethoxy-N-(3-trimethoxysilylpropoxycarbonyl(methyl)ethyl)-1-aza-2-silacyclopentane, 2,2-diethoxy-N-(3-triethoxysilylpropoxycarbonyl(methyl)ethyl)-1-aza-2-silacyclopentane, 2,2-dimethoxy-N-(3-trimethoxysilylpropyplureidoethyl)-1-aza-2-silacyclopentane, 2-methoxy-2-methyl-N-(3-trimethoxysilylpropylureidoethyl)-1-aza-2-silacyclopentane, 2,2-diethoxy-N-(3-triethoxysilylpropylureidoethyl)-1-aza-2-silacyclopentane, 2-ethoxy-2-methyl-N-(3-triethoxysilylpropylureidoethyl)-1-aza-2-silacyclopentane, 2,2-dimethoxy-N-(trimethoxysilylethyldimethylsiloxydimethylsilylpropyl(methyl))-1-aza-2-silacyclopentane, and 2,2-dimethoxy-N-(1,1,1-trimethoxy-3,3,5,5,7,7-hexamethyltetrasiloxydimethylsilylpropyl)-1-aza-2-silacyclopentane;
cyclic silazane compounds having an alkyldialkoxysilylalkyl group such as 2,2-dimethoxy-N-(methyldimethoxysilylpropyl)-1-aza-2-silacyclopentane, 2,2-dimethoxy-N-(methyldimethoxysilylmethyl)-1-aza-2-silacyclopentane, 2,2-dimethoxy-N-(methyldimethoxysilylhexyl)-1-aza-2-silacyclopentane, 2,2-dimethoxy-N-(methyldimethoxysilyloctyl)-1-aza-2-silacyclopentane, 2-methoxy-2-methyl-N-(methyldimethoxysilylhexyl)-1-aza-2-silacyclopentane, 2-methoxy-2-methyl-N-(methyldimethoxysilyloctyl)-1-aza-2-silacyclopentane, 2,2-diethoxy-N-(methyldiethoxysilylpropyl)-1-aza-2-silacyclopentane, 2,2-diethoxy-N-(methyldiethoxysilylmethyl)-1-aza-2-silacyclopentane, 2,2-diethoxy-N-(methyldiethoxysilylhexyl)-1-aza-2-silacyclopentane, 2,2-diethoxy-N-(methyldiethoxysilyloctyl)-1-aza-2-silacyclopentane, 2-ethoxy-2-methyl-N-(methyldiethoxysilylhexyl)-1-aza-2-silacyclopentane, 2-ethoxy-2-methyl-N-(methyldiethoxysilyloctyl)-1-aza-2-silacyclopentane, 2,2-dimethoxy-N-(methyldimethoxysilylthioethyl)-1-aza-2-silacyclopentane, 2-methoxy-2-methyl-N-(methyldimethoxysilylthioethyl)-1-aza-2-silacyclopentane, 2,2-dimethoxy-N-(methyldimethoxysilylthiopropyl)-1-aza-2-silacyclopentane, 2-methoxy-2-methyl-N-(methyldimethoxysilylthiopropyl)-1-aza-2-silacyclopentane, 2,2-dimethoxy-N-(3-methyldimethoxysilylpropoxycarbonylethyl)-1-aza-2-silacyclopentane, 2,2-diethoxy-N-(3-methyldiethoxysilylpropoxycarbonylethyl)-1-aza-2-silacyclopentane, 2,2-dimethoxy-N-(3-methyldimethoxysilylpropoxycarbonyl(methyl)ethyl)-1-aza-2-silacyclopentane, and 2,2-diethoxy-N-(3-methyldiethoxysilylpropoxycarbonyl(methyl)ethyl)-1-aza-2-silacyclopentane;
cyclic silazane compounds having a dialkylalkoxysilylalkyl group such as 2,2-dimethoxy-N-(dimethylmethoxysilylmethyl)-1-aza-2-silacyclopentane, 2,2-dimethoxy-N-(dimethylmethoxysilylhexyl)-1-aza-2-silacyclopentane, 2,2-dimethoxy-N-(dimethylmethoxysilyloctyl)-1-aza-2-silacyclopentane, 2-methoxy-2-methyl-N-(dimethylmethoxysilylhexyl)-1-aza-2-silacyclopentane, 2-methoxy-2-methyl-N-(dimethylmethoxysilyloctyl)-1-aza-2-silacyclopentane, 2,2-dimethoxy-N-(diethylmethoxysilylhexyl)-1-aza-2-silacyclopentane, 2,2-dimethoxy-N-(diethylmethoxysilyloctyl)-1-aza-2-silacyclopentane, 2-methoxy-2-methyl-N-(diethylmethoxysilylhexyl)-1-aza-2-silacyclopentane, 2-methoxy-2-methyl-N-(diethylmethoxysilyloctyl)-1-aza-2-silacyclopentane, 2,2-dimethoxy-N-(diphenylmethoxysilylhexyl)-1-aza-2-silacyclopentane, 2,2-dimethoxy-N-(diphenylmethoxysilyloctyl)-1-aza-2-silacyclopentane, 2-methoxy-2-methyl-N-(diphenylmethoxysilylhexyl)-1-aza-2-silacyclopentane, 2-methoxy-2-methyl-N-(diphenylmethoxysilyloctyl)-1-aza-2-silacyclopentane, and 2,2-diethoxy-N-(dimethylethoxysilylmethyl)-1-aza-2-silacyclopentane.

It is noted that Compound (2) can be prepared by the well-known method described in JP-A 2011-102267 or the like.

In formula (3), Y is a substituent group having the general formula (4) or R¹₃Si wherein R¹ is as defined above.

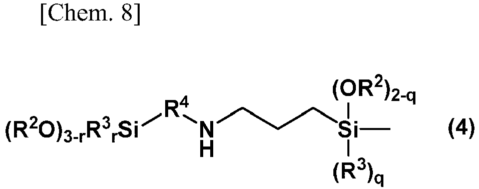

Herein R² to R⁴, q, and r are as defined above.

In the method of the invention, the mixing ratio of Compound (1) and Compound (2), though not particularly limited, is preferably such that 1 to 2 moles, more preferably 1 to 1.5 moles, even more preferably 1 to 1.2 moles of Compound (2) is present per mole of silanol group in Compound (1).

The reaction may be carried out by adding Compound (2) to Compound (1) or vice versa.

The reaction temperature, though not particularly limited, is preferably 0 to 200°C, more preferably 0 to 150°C, even more preferably 10 to 60°C from the aspect of product stability.

The reaction time, though not particularly limited, is preferably 5 minutes to 40 hours, more preferably 10 minutes to 20 hours, even more preferably 10 minutes to 5 hour from the aspect of product stability.

It is noted that the reaction is preferably carried out in an inert gas atmosphere such as nitrogen or argon in order to prevent dehydrating condensation of Compound (1) or hydrolysis of Compound (2) or (3).

Although the reaction takes place in a solventless system, a solvent may be used.

Examples of the solvent include C₅-C₂₀ aliphatic hydrocarbon solvents such as pentane, hexane, cyclohexane, heptane, octane, nonane, decane, isooctane, and isododecane; C₆-C₁₀ aromatic hydrocarbon solvents such as benzene, toluene and xylene; ether solvents such as diethyl ether, tetrahydrofuran, dioxane and dipropylene glycol dimethyl ether; ester solvents such as ethyl acetate and butyl acetate; aprotic polar solvents such as acetonitrile, N,N-dimethylforamide, and N-methylpyrrolidone; and silicone solvents such as hexamethyldisiloxane, octamethyltrisiloxane, decamethyltetrasiloxane, tris(trimethylsiloxy)methylsilane, octamethylcyclotetrasiloxane, and decamethylcyclopentasiloxane, which may be used alone or in admixture.

Compound (3) resulting from the above reaction may be isolated or purified by any purifying methods used in ordinary organic synthesis such as vacuum stripping, various chromatography processes, treatment with adsorbents such as activated carbon, and filtration.

Examples of Compound (3) include
1-(alkoxysilylalkylaminopropyl)polysiloxane compounds wherein Y is R¹₃Si such as 1-(3-trimethoxysilylpropylaminopropyl)-1,1-dimethoxy-3,3,5,5,7,7,9,9,9-nonamethylpentasiloxane, 1-(3-triethoxysilylpropylaminopropyl)-1,1-diethoxy-3,3,5,5,7,7,9,9,9-nonamethylpentasiloxane, 1-(8-trimethoxysilylpropylaminooctyl)-1,1-dimethoxy-3,3,5,5,7,7,9,9,9-nonamethylpentasiloxane, 1-(8-triethoxysilylpropylaminopropyl)-1,1-diethoxy-3,3,5,5,7,7,9,9,9-nonamethylpentasiloxane, 1-(8-triethoxysilylpropylaminopropyl)-1-ethoxy-1,3,3,5,5,7,7,9,9,9-decamethylpentasiloxane, 1-(3-trimethoxysilylpropylaminopropyl)-1,1-dimethoxy-3,3,5,5,7,7,9,9,9-nonamethylpentasiloxane, 1-(3-trimethoxysilylpropylaminopropyl)-1,1-dimethoxy-3,3,5,5,7,7,9,9-octamethyl-9-vinylpentasiloxane, 1-(3-trimethoxysilylpropylaminopropyl)-1,1-dimethoxy-3,3,5,5,7,7,9,9-octamethyl-9-chloromethylpentasiloxane, 1-(3-trimethoxysilylpropylaminopropyl)-1,1-dimethoxy-3,3,5,5,7,7,9,9-octamethyl-9-chloropropylpentasiloxane, 1-(3-trimethoxysilylpropylaminopropyl)-1,1-dimethoxy-3,3,5,5,7,7-hexavinyl-9,9,9-trimethylpentasiloxane, 1-(3-trimethoxysilylpropylaminopropyl)-1,1-dimethoxy-3,3,5,5,7,7-hexaphenyl-9,9,9-trimethylpentasiloxane, 1-(3-trimethoxysilylpropylaminopropyl)-1,1-dimethoxy-3,5,7-tris(3,3,3-trifluoropropyl)-3,5,7,9,9,9-hexamethylpentasiloxane, 1-(3-trimethoxysilylpropylaminopropyl)-1,1-dimethoxy-3,3,5,5,7,7,9-heptavinyl-9,9-dimethylpentasiloxane, 1-(3-trimethoxysilylpropylaminopropyl)-1,1-dimethoxy-3,3,5,5,7,7,9-heptamethyl-9,9-diphenylpentasiloxane, 1-(3-trimethoxysilylpropylaminopropyl)-1,1-dimethoxy-3,3,5,5,7,7,9,9-octaphenyl-7-methylpentasiloxane, 1-(3-trimethoxysilylpropylaminopropyl)-1,1-dimethoxy-3,3,5,5,7,7,9,9,9-nonaphenyl-pentasiloxane, α-(3-trimethoxysilylpropylaminopropyl)-α,α-dimethoxy-ω-methylpolydimethylpolysiloxane, α-(3-triethoxysilylpropylaminopropyl)-α,α-diethoxy-ω-methylpolydimethylpolysiloxane, α-(3-trimethoxysilylpropylaminopropyl)-α,α-dimethoxy-ω-vinylpolydimethylpolysiloxane, α-(3-trimethoxysilylpropylaminopropyl)-α,α-dimethoxy-ω-chloromethyldimethylpolysiloxane, α-(3-trimethoxysilylpropylaminopropyl)-α,α-dimethoxy-ω-chloropropyldimethylpolysiloxane, and α-(3-trimethoxysilylpropylaminopropyl)-α,α-dimethoxy-ω-phenyldimethylpolysiloxane; and
α,ω-bis(alkoxysilylalkylaminopropyl)polysiloxane compounds wherein Y is a group of formula (4) such as 1,11-bis(3-trimethoxysilylpropylaminopropyl)-1,1,11,11-tetramethoxy-3,3,5,5,7,7,9,9-octamethylhexasiloxane, 1,11-bis(3-triethoxysilylpropylaminopropyl)-1,1,11,11-tetraethoxy-3,3,5,5,7,7,9,9-octamethylhexasiloxane, 1,11-bis(3-trimethoxysilylpropylaminopropyl)-1,1,11,11-tetramethoxy-3,3,5,5,7,7,9-heptamethyl-9-vinylhexasiloxane, 1,11-bis(3-trimethoxysilylpropylaminopropyl)-1,1,11,11-tetramethoxy-3,5,7-tris(3,3,3-trifluoropropyl)-3,5,7,9,9-pentamethylhexasiloxane, α,ω-bis(3-trimethoxysilylpropylaminopropyl)-α,α,ω,ω-tetramethoxydimethylpolysiloxane, α,ω-bis(3-triethoxysilylpropylaminopropyl)-α,α,ω,ω-tetraethoxydimethylpolysiloxane, α,ω-bis(8-trimethoxysilylpropylaminooctyl)-α,α,ω,ω-tetramethoxydimethylpolysiloxane, α,ω-bis(8-triethoxysilylpropylaminooctyl)-α,α,ω,ω-tetraethoxydimethylpolysiloxane, α,ω-bis(trimethoxysilylpropylaminomethyl)-α,α,ω,ω-tetramethoxydimethylpolysiloxane, α,ω-bis(triethoxysilylpropylaminomethyl)-α,α,ω,ω-tetraethoxydimethylpolysiloxane, α,ω-bis(dimethylmethoxysilylpropylaminomethyl)-α,α,ω,ω-tetramethoxydimethylpolysiloxane, and α,ω-bis(dimethylethoxysilylpropylaminomethyl)-α,α,ω,ω-tetramethoxydimethylpolysiloxane.

### EXAMPLES

Synthesis Examples, Examples, and Comparative Examples are given below for further illustrating the invention although the invention is not limited thereto.

### [Synthesis Example 1]

### Synthesis of 2,2-dimethoxy-N-(trimethoxysilyloctyl)-1-aza-2-silacyclopentane

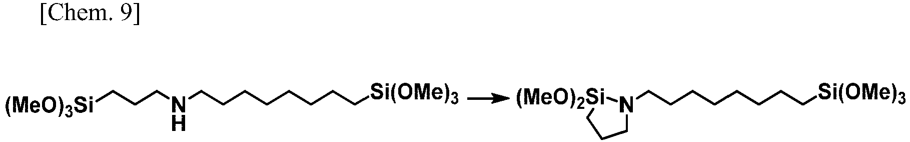

Herein Me stands for methyl (the same holds true, hereinafter).

A four-necked glass flask equipped with a stirrer, thermometer, distillation column, and reflux condenser was purged with nitrogen, to which 122 g (0.296 mol) of (trimethoxysilylpropyl)-(trimethoxysilyloctyl)amine, 132 g of toluene, and 0.75 g (0.0050 mol) of trifluoromethanesulfonic acid were added and heated under reflux. To the mixture, 58.4 g (0.311 mol) of N-trimethylsilyl-N-methylaniline was added and stirred. Trimethylmethoxysilane formed in the course of reaction was withdrawn together with toluene through the distillation column until the reaction temperature reached 150°C.

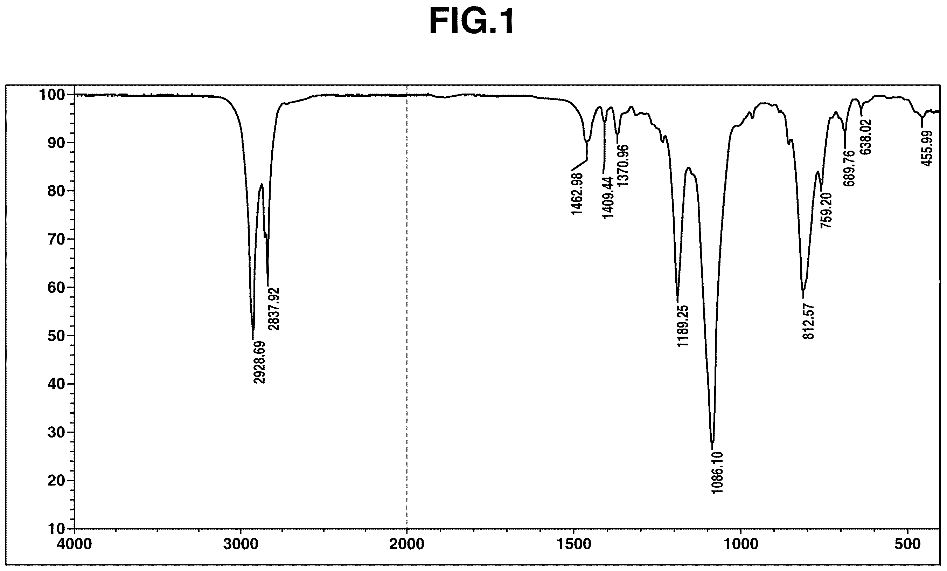

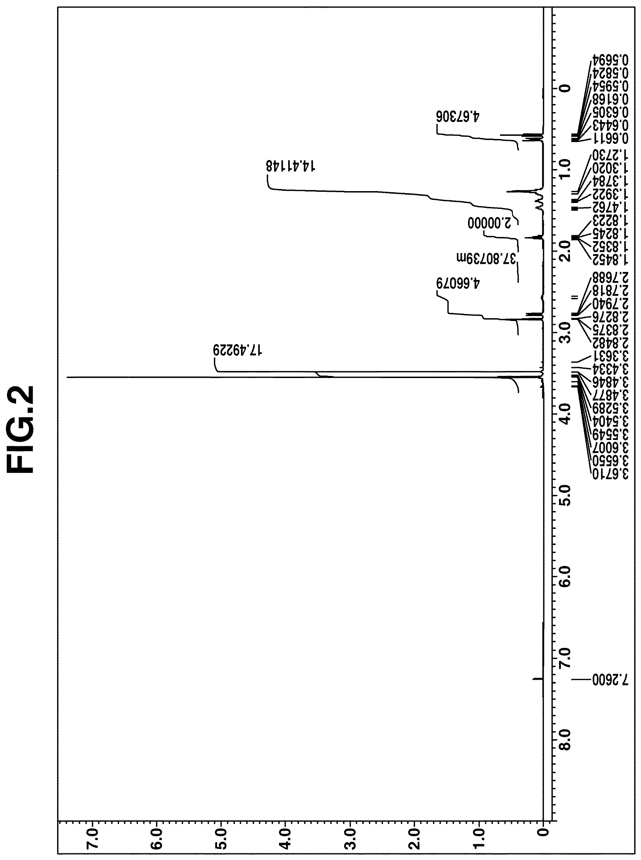

On distillation of the reaction solution, 66 g of a fraction having a boiling point of 170°C/0.5 kPa was obtained (yield 58%). The fraction was analyzed by IR and ¹H-NMR spectroscopy. The results are shown in FIGS. 1 and 2.

### [Synthesis Example 2]

### Synthesis of 2-ethoxy-2-methyl-N-(triethoxysilyloctyl)-1-aza-2-silacyclopentane

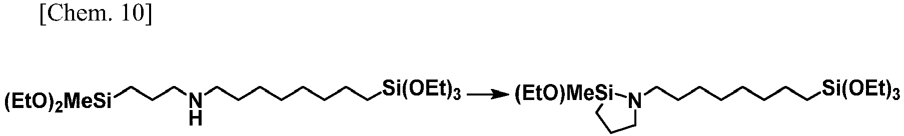

Herein Et stands for ethyl (the same holds true, hereinafter).

A four-necked glass flask equipped with a stirrer, thermometer, distillation column, and reflux condenser was purged with nitrogen, to which 162 g (0.348 mol) of (methyldiethoxysilylpropyl)-(triethoxysilyloctyl)amine, 114 g of toluene, and 1.0 g (0.0067 mol) of trifluoromethanesulfonic acid were added and heated under reflux. To the mixture, 68.5 g (0.382 mol) of N-trimethylsilyl-N-methylaniline was added and stirred. Trimethylethoxysilane formed in the course of reaction was withdrawn together with toluene through the distillation column until the reaction temperature reached 150°C.

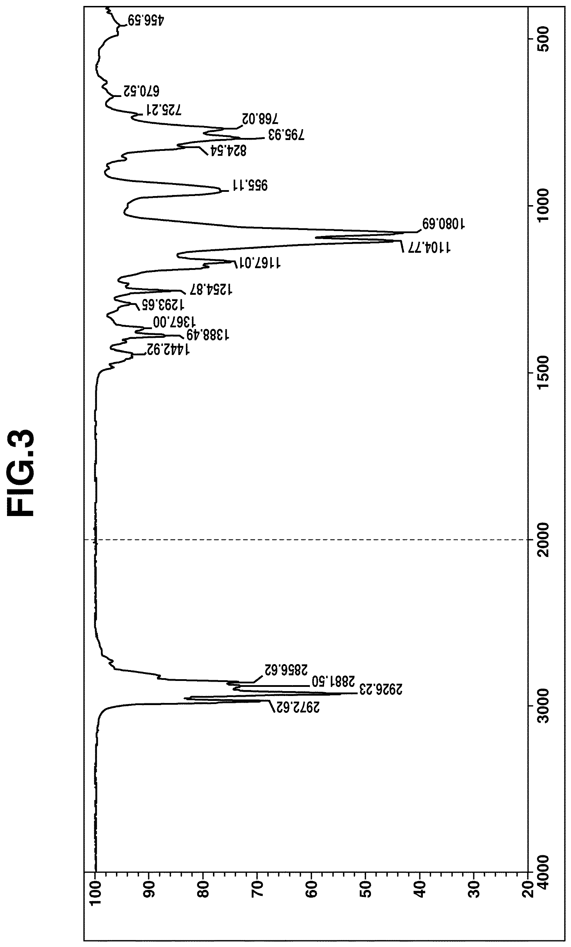

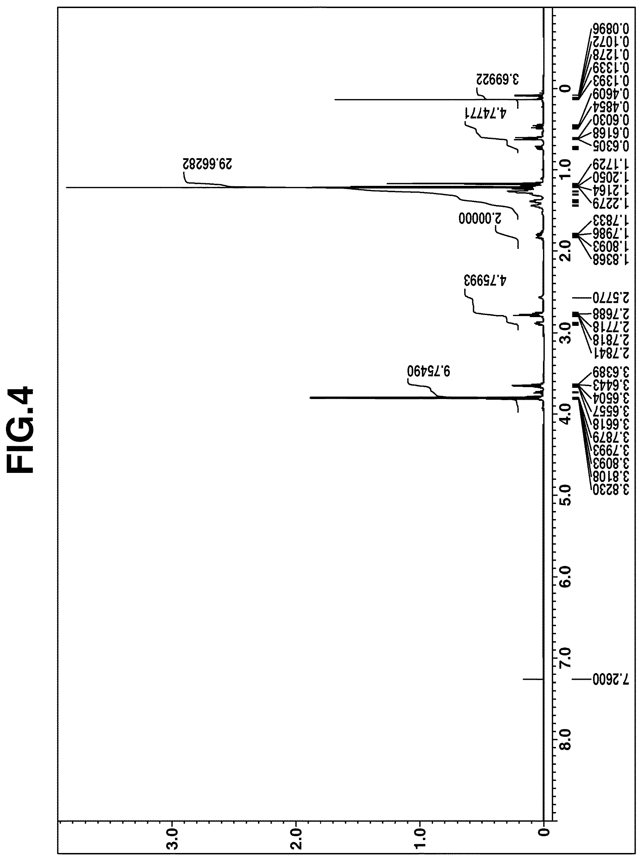

On distillation of the reaction solution, 110 g of a fraction having a boiling point of 177°C/0.2 kPa was obtained (yield 75%). The fraction was analyzed by IR and ¹H-NMR spectroscopy. The results are shown in FIGS. 3 and 4.

### [Synthesis Example 3]

### Synthesis of 2-methoxy-2-methyl-N-(trimethoxysilylpropylthioethyl)-1-aza-2-silacyclopentane

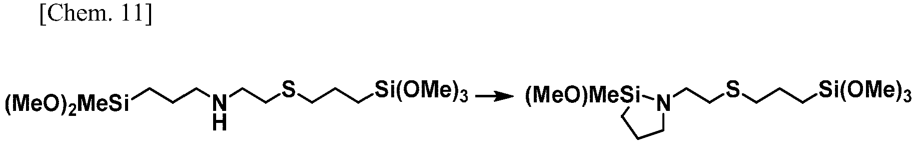

A four-necked glass flask equipped with a stirrer, thermometer, distillation column, and reflux condenser was purged with nitrogen, to which 86.0 g (0.221 mol) of (methyldimethoxysilylpropyl)-(trimethoxysilylpropylthioethyl)amine, 110 g of toluene, and 0.4 g (0.003 mol) of trifluoromethanesulfonic acid were added and heated under reflux. To the mixture, 44.0 g (0.245 mol) of N-trimethylsilyl-N-methylaniline was added and stirred. Trimethylmethoxysilane formed in the course of reaction was withdrawn together with toluene through the distillation column until the reaction temperature reached 140°C.

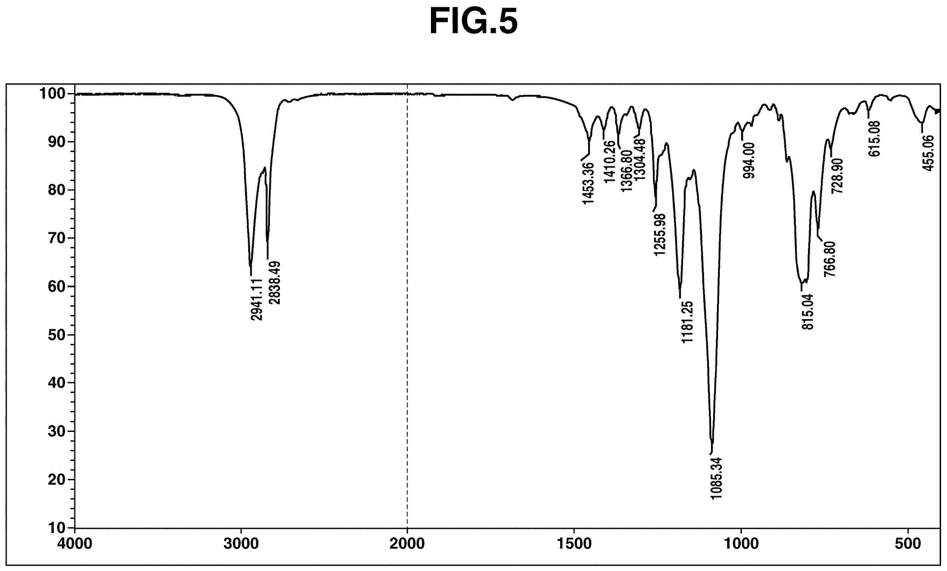

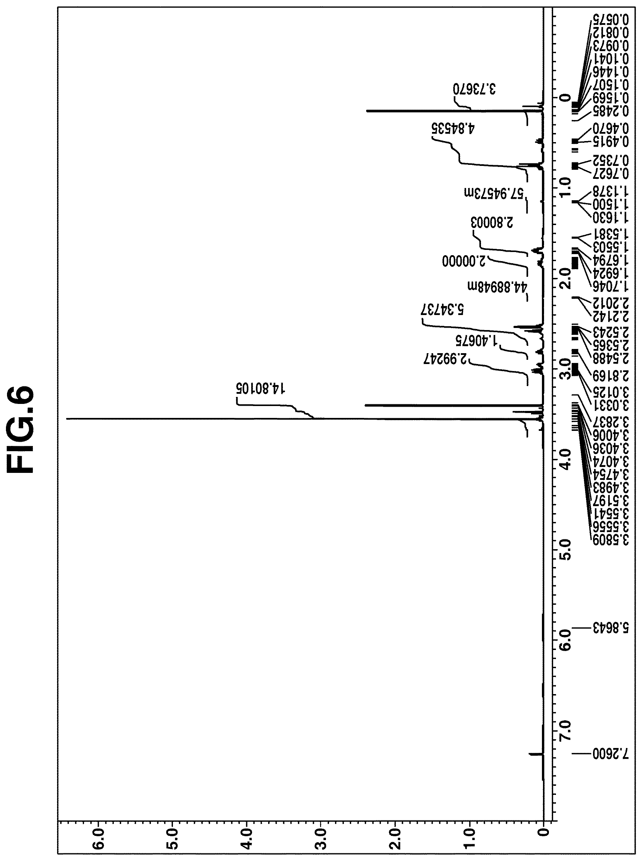

On distillation of the reaction solution, 54 g of a fraction having a boiling point of 140-150°C/0.4 kPa was obtained (yield 69%). The fraction was analyzed by IR and ¹H-NMR spectroscopy. The results are shown in FIGS. 5 and 6.

### [Synthesis Example 4]

### Synthesis of 2,2-diethoxy-N-triethoxysilylmethyl-1-aza-2-silacyclopentane

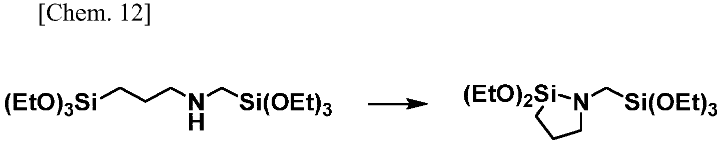

A four-necked glass flask equipped with a stirrer, thermometer, and reflux condenser was purged with nitrogen, charged with 126.1 g (40 wt% THF solution, 0.2752 mol) of sodium hexamethyldisilazide, and cooled at 5°C. To the flask, 99.3 g (0.250 mol) of (triethoxysilylmethyl)-(triethoxysilylpropyl)amine was added dropwise over 1 hour. Stirring was continued at the temperature for a further 1 hour.

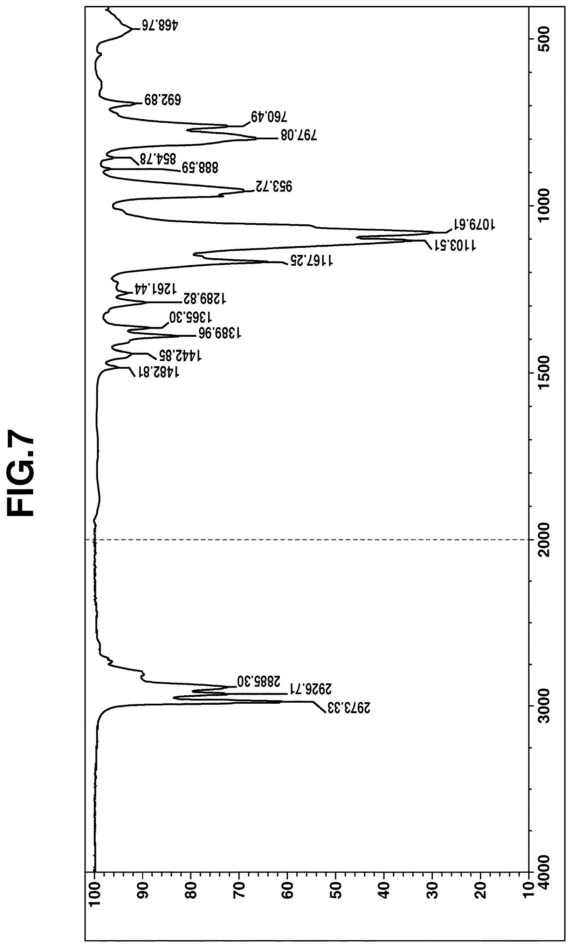

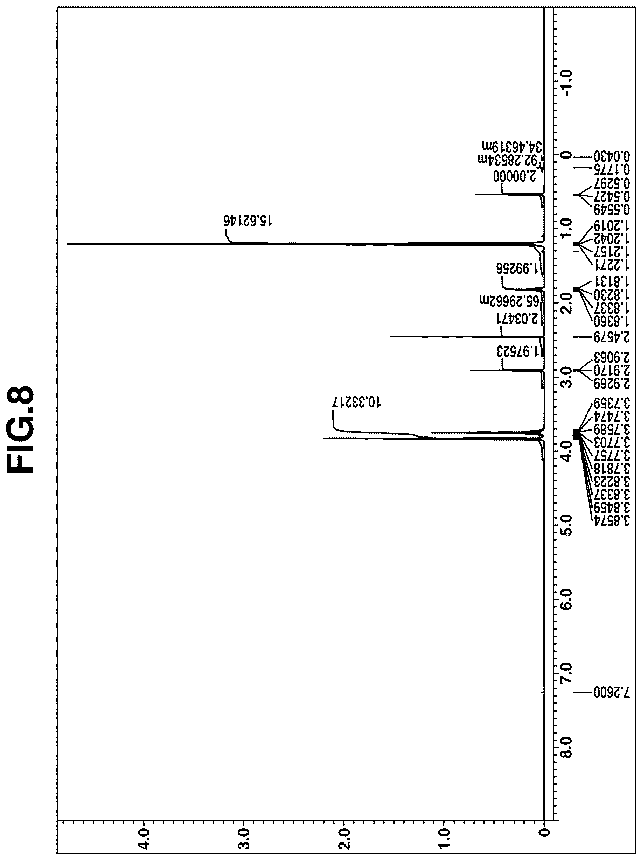

On GC-MS analysis of the reaction solution, it was found that 2,2-diethoxy-N-triethoxysilylmethyl-1-aza-2-silacyclopentane formed at a conversion rate of 97%. On filtration and subsequent distillation of the reaction solution, 2,2-diethoxy-N-triethoxysilylmethyl-1-aza-2-silacyclopentane was collected as 54.0 g of a fraction having a boiling point of 105°C/0.4 kPa. The fraction was analyzed by IR and ¹H-NMR spectroscopy. The results are shown in FIGS. 7 and 8.

It is noted that the conversion rate was determined from the area values of reactant and product on gas chromatography, referred to as GC analysis, hereinafter, according to the following calculation:$\left(\left.area value of product\right)/\left(area value of reactant+area value of product\right.\right) \times 100 .$

### [Example 1-1]

### Synthesis of 1-(3-trimethoxysilylpropylaminopropyl)-1,1-dimethoxy-3,3,5,5,7,7,9,9,9-nonamethylpentasiloxane

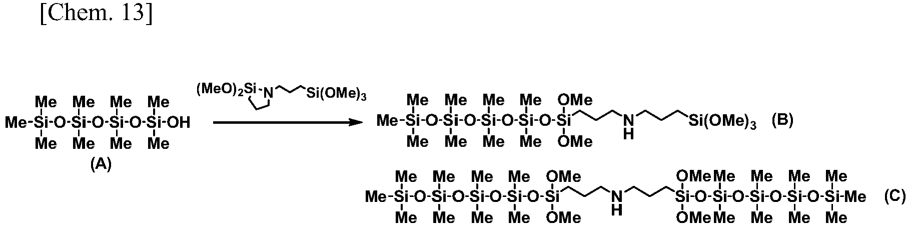

A four-necked glass flask equipped with a stirrer, thermometer, and reflux condenser was purged with nitrogen and charged with 10 g (0.032 mol) of 1-hydroxy-1,1,3,3,5,5,7,7,7-nonamethyltetrasiloxane (A). To the flask, 9.9 g (0.032 mol) of 2,2-dimethoxy-N-trimethoxysilylpropyl-1-aza-2-silacyclopentane was added from a dropping funnel, followed by 1 hour of stirring at room temperature. A gas chromatography (GC) analysis of the reaction solution revealed that the desired Compound (B) formed with no residues of 1-hydroxy-1,1,3,3,5,5,7,7,7-nonamethyltetrasiloxane and 2,2-dimethoxy-N-trimethoxysilylpropyl-1-aza-2-silacyclopentane.

The conversion rate was 96% when calculated on the basis of 1-hydroxy-1,1,3,3,5,5,7,7,7-nonamethyltetrasiloxane according to the following formula. The formation rate of by-product (C) was 1% when calculated according to the following formula. $\begin{matrix}Conversion rate = \\ \left[\left(GC area value of B+GC area value of C\right)/\left(\begin{matrix}GC area value of A + GC area value of B \\ + GC area value of C\end{matrix}\right)\right] \times 100\end{matrix}$ $Formation rate of C = \left(GC area value of C\right) / \left(GC area value of B+GC area value of C\right)$

### [Comparative Example 1-1]

### Synthesis of 1-(3-trimethoxysilylpropylaminopropyl)-1,1-dimethoxy-3,3,5,5,7,7,9,9,9-nonamethylpentasiloxane

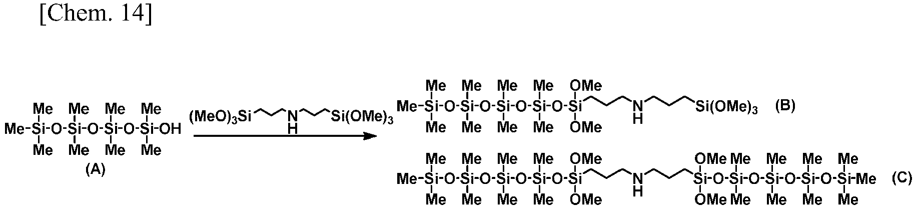

Reaction was carried out as in Example 1-1 aside from using 11 g (0.032 mol) of bis(3-trimethoxysilylpropyl)amine instead of 9.9 g of 2,2-dimethoxy-N-trimethoxysilylpropyl-1-aza-2-silacyclopentane. A GC analysis of the reaction solution revealed that the desired Compound (B) formed, and some 1-hydroxy-1,1,3,3,5,5,7,7,7-nonamethyltetrasiloxane and bis(3-trimethoxysilylpropyl)amine remained.

The conversion rate was 89% when calculated as in Example 1-1 on the basis of 1-hydroxy-1,1,3,3,5,5,7,7,7-nonamethyltetrasiloxane. The formation rate of by-product (C) was 39%.

### [Comparative Example 1-2]

### Synthesis of 1-(3-trimethoxysilylpropylaminopropyl)-1,1-dimethoxy-3,3,5,5,7,7,9,9,9-nonamethylpentasiloxane

The reaction solution obtained in Comparative Example 1-1 was heated at 130°C. As methanol formed with the progress of reaction, it was removed out of the system. The distillation of methanol was continued until the reaction temperature reached 155°C. Thereafter, the reaction solution was cooled to room temperature.

On GC analysis of the reaction solution at this point of time as in Example 1-1, the conversion rate was 100% when calculated on the basis of 1-hydroxy-1,1,3,3,5,5,7,7,7-nonamethyltetrasiloxane. The formation rate of by-product (C) was 33%.

In this way, 1-(3-trimethoxysilylpropylaminopropyl)-1,1-dimethoxy-3,3,5,5,7,7,9,9,9-nonamethylpentasiloxane (Compound 8), 18 g, was obtained as a yellow transparent liquid.

### [Example 1-2]

### Synthesis of both end alkoxysilylalkylaminopropyl-modified polysiloxane compound 1

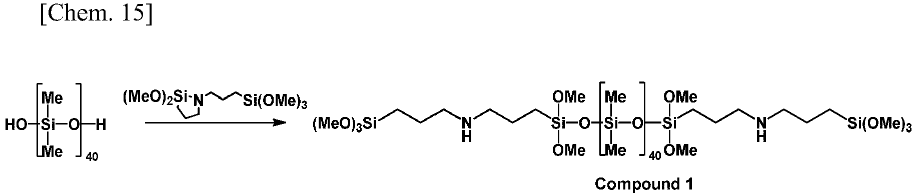

A four-necked glass flask equipped with a stirrer, thermometer, and reflux condenser was purged with nitrogen and charged with 225 g (0.15 mol as silanol) of a silanol-modified polydimethylsiloxane having a number average molecular weight of 3,000 as analyzed by gel permeation chromatography (GPC), which was stirred. To the flask, 51.0 g (0.165 mol) of 2,2-dimethoxy-N-trimethoxysilylpropyl-1-aza-2-silacyclopentane was added from a dropping funnel, followed by 1 hour of stirring at room temperature. On GC analysis of the reaction solution, the disappearance of 2,2-dimethoxy-N-trimethoxysilylpropyl-1-aza-2-silacyclopentane was confirmed and regarded as the end of reaction. An IR analysis of the product revealed the disappearance of the peak attributable to silanol.

In this way, both end alkoxysilylalkylaminopropyl-modified polysiloxane compound 1, 268.5 g, was obtained as a colorless transparent liquid.

### [Example 1-3]

### Synthesis of both end alkoxysilylalkylaminopropyl-modified polysiloxane compound 2

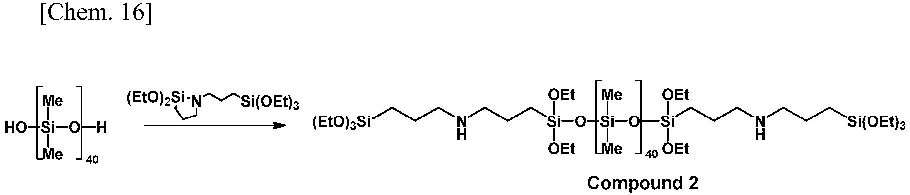

Reaction was carried out as in Example 1-2 aside from using 63.0 g (0.165 mol) of 2,2-diethoxy-N-triethoxysilylpropyl-1-aza-2-silacyclopentane instead of 51.0 g of 2,2-dimethoxy-N-trimethoxysilylpropyl-1-aza-2-silacyclopentane.

An IR analysis of the product revealed the disappearance of the peak attributable to silanol. Both end alkoxysilylpropylaminopropyl-modified polysiloxane compound 2, 286.5 g, was obtained as a colorless transparent liquid.

### [Example 1-4]

### Synthesis of both end alkoxysilylalkylaminooctyl-modified polysiloxane compound 3

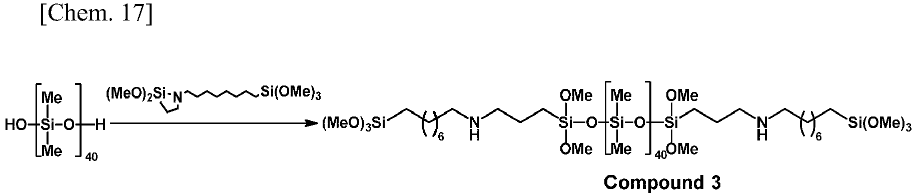

Reaction was carried out as in Example 1-2 aside from changing the amount of the silanol-modified polydimethylsiloxane to 15.0 g (0.0100 mol as silanol) and using 4.1 g (0.011 mol) of 2,2-dimethoxy-N-trimethoxysilyloctyl-1-aza-2-silacyclopentane instead of 51.0 g of 2,2-dimethoxy-N-trimethoxysilylpropyl-1-aza-2-silacyclopentane.

An IR analysis of the product revealed the disappearance of the peak attributable to silanol. Both end alkoxysilylalkylaminooctyl-modified polysiloxane compound 3, 18 g, was obtained as a colorless transparent liquid.

### [Example 1-5]

### Synthesis of both end alkoxysilylalkylaminooctyl-modified polysiloxane compound 4

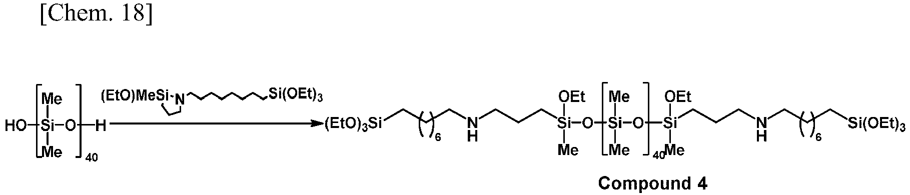

Reaction was carried out as in Example 1-2 aside from changing the amount of the silanol-modified polydimethylsiloxane to 15.0 g (0.010 mol as silanol) and using 4.8 g (0.011 mol) of 2-ethoxy-2-methyl-N-triethoxysilyloctyl-1-aza-2-silacyclopentane instead of 51.0 g of 2,2-dimethoxy-N-trimethoxysilylpropyl-1-aza-2-silacyclopentane.

An IR analysis of the product revealed the disappearance of the peak attributable to silanol. Both end alkoxysilylalkylaminooctyl-modified polysiloxane compound 4, 19 g, was obtained as a colorless transparent liquid.

### [Example 1-6]

### Synthesis of both end alkoxysilylalkylaminoalkyl-modified polysiloxane compound 5

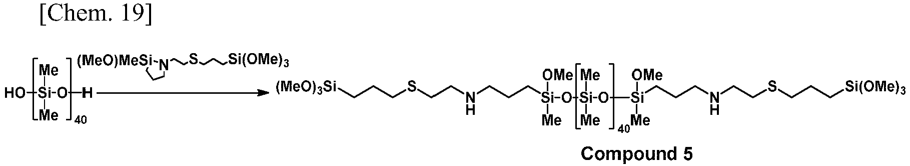

Reaction was carried out as in Example 1-2 aside from changing the amount of the silanol-modified polydimethylsiloxane to 15.0 g (0.010 mol as silanol) and using 3.9 g (0.011 mol) of 2-methoxy-2-methyl-N-trimethoxysilylpropylthioethyl-1-aza-2-silacyclopentane instead of 51.0 g of 2,2-dimethoxy-N-trimethoxysilylpropyl-1-aza-2-silacyclopentane.

An IR analysis of the product revealed the disappearance of the peak attributable to silanol. Both end alkoxysilylpropylaminoalkyl-modified polysiloxane compound 5, 18 g, was obtained as a colorless transparent liquid.

### [Example 1-7]

### Synthesis of both end alkoxysilylalkylaminopropyl-modified polysiloxane compound 6

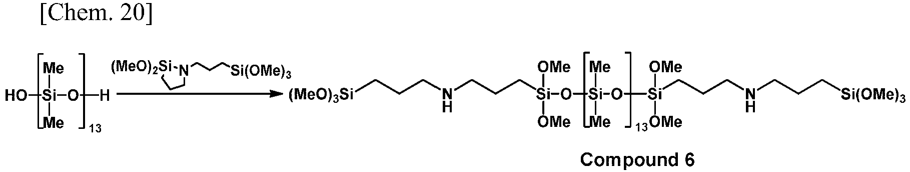

Reaction was carried out as in Example 1-2 aside from changing the silanol-modified polydimethylsiloxane to 50 g (0.10 mol as silanol) of a silanol-modified polydimethylsiloxane having a Mn of 1,000 as measured by GPC and changing the amount of 2,2-dimethoxy-N-trimethoxysilylpropyl-1-aza-2-silacyclopentane to 32.5 g (0.105 mol).

An IR analysis of the product revealed the disappearance of the peak attributable to silanol. Both end alkoxysilylpropylaminopropyl-modified polysiloxane compound 6, 81 g, was obtained as a colorless transparent liquid.

### [Example 1-8]

### Synthesis of both end alkoxysilylalkylaminomethyl-modified polysiloxane compound 7

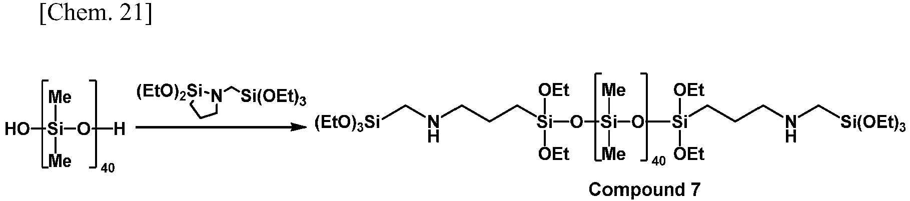

Reaction was carried out as in Example 1-2 aside from changing the amount of the silanol-modified polydimethylsiloxane to 15 g (0.010 mol as silanol) and using 3.9 g (0.011 mol) of 2,2-diethoxy-N-triethoxysilylmethyl-1-aza-2-silacyclopentane instead of 2,2-dimethoxy-N-trimethoxysilylpropyl-1-aza-2-silacyclopentane.

An IR analysis of the product revealed the disappearance of the peak attributable to silanol. Both end alkoxysilylpropylaminomethyl-modified polysiloxane compound 7, 18 g, was obtained as a colorless transparent liquid.

### [Comparative Example 1-3]

### Synthesis of both end alkoxysilylalkylaminomethyl-modified polysiloxane compound 9

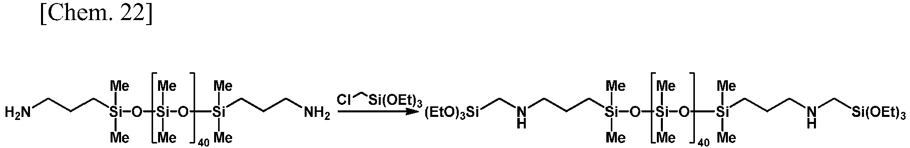

According to the teaching of Patent Document 2, a four-necked glass flask equipped with a stirrer, thermometer, and reflux condenser was purged with nitrogen and charged with 80 g (0.053 mol as amino group) of an amino-modified polydimethylsiloxane, 7.7 g (0.076 mol) of triethylamine and 40 g of toluene and heated at 90°C. To the flask, 15 g (0.072 mol) of chloromethyltriethoxysilane was added from a dropping funnel, followed by 20 hours of stirring at the temperature.

On GC analysis of the reaction solution at this point of time, part of chloromethyltriethoxysilane remained. The reaction solution was filtered to remove the triethylamine hydrochloride which formed in the course of reaction, after which the residue was washed with toluene. Then toluene was removed from the filtrate, yielding both end alkoxysilylalkylaminomethyl-modified polysiloxane compound 9 as a brown transparent material.

### [Comparative Example 1-4]

### Synthesis of both end alkoxysilylalkylaminopropyl-modified polysiloxane compound 10

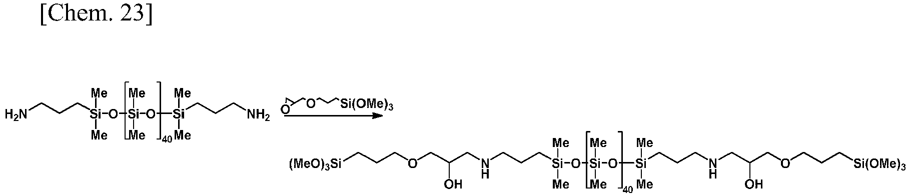

According to the teaching of Patent Document 3, a four-necked glass flask equipped with a stirrer, thermometer, and reflux condenser was purged with nitrogen, charged with 75 g (0.050 mol as amino group) of an amino-modified polydimethylsiloxane, and heated at 100°C. To the flask, 18.8 g (0.050 mol) of 3-glycidoxypropyltrimethoxysilane was added from a dropping funnel, followed by 12 hours of stirring at the temperature. A GC analysis revealed a minute residue of 3-glycidoxypropyltrimethoxysilane. Without further operation, both end alkoxysilylalkylaminopropyl-modified polysiloxane compound 10 was obtained as colorless slightly turbid one.

The results of Examples 1-1 to 1-8 demonstrate that in the reaction of a silanol-modified polysiloxane compound with an alkoxysilyl-containing cyclic silazane compound, a silanol site briefly reacts with a cyclic silazane site at room temperature. In particular, the formation rate of by-product is low and reaction takes place at a high selectivity as seen from the results of Example 1-1 and Comparative Examples 1-1 and 1-2.

In contrast, Comparative Examples 1-1 and 1-2 show that in the reaction of a silanol-modified polysiloxane compound with a bis(alkoxysilylalkyl)amine at room temperature, the conversion rate was insufficient and some reactants remained. Alcohol must be removed by heating before the conversion rate can be increased. Despite high temperature/long time reaction, one of the reactants remained in Comparative Examples 1-3 and 1-4.

### [Examples 2-1 to 2-7 and Comparative Examples 2-1 to 2-3]

A vial was charged with each of both end alkoxysilylalkylaminomethyl-modified polysiloxane compounds 1 to 10 obtained in Examples 1-2 to 1-8 and Comparative Examples 1-2 to 1-4 while taking care so as to avoid moisture entry, and purged with nitrogen. The vial was allowed to stand at room temperature (25°C) for one month. Changes of outer appearance and color were visually observed and compared with those of the reaction solution immediately after reaction. The results are shown in Table 1.

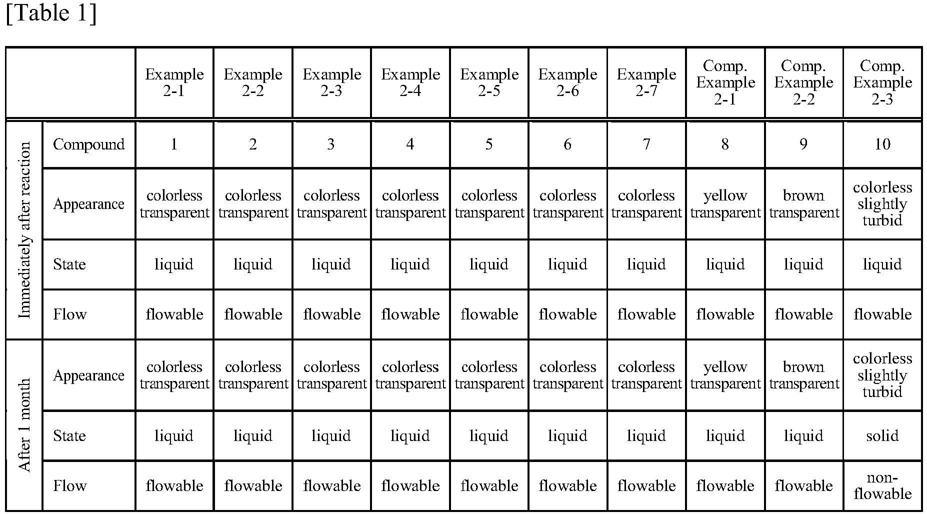

As seen from Table 1, both end alkoxysilylalkylaminopropyl-modified polysiloxane compounds 1 to 7 obtained in Examples 1-2 to 1-8 showed no changes of outer appearance, state and flow both immediately after preparation and after the lapse of 1 month.

For both end alkoxysilylalkylaminopropyl-modified polysiloxane compound obtained in Comparative Example 1-2, the product was colored because of exposure to high temperature during preparation (Comparative Example 2-1). For both end alkoxysilylalkylaminopropyl-modified polysiloxane compound obtained in Comparative Example 1-3, substantial coloration was noticed in the course of reaction because the method involved generation of chloride ions (Comparative Example 2-2).

For both end alkoxysilylalkylaminopropyl-modified polysiloxane compound obtained in Comparative Example 1-4, no coloration was noticed, but the solution was turbid, indicating formation of high molecular weight compounds. After the lapse of 1 month, the both end alkoxysilylalkylaminopropyl-modified polysiloxane compound solidified and lost flow. It is believed that as the alcohol resulting from ring-opening of the epoxy group underwent intramolecular and intermolecular condensation, the compound built up its viscosity and solidified (Comparative Example 2-3).

## Claims

1. A method for producing an alkoxysilylalkylaminopropyl-modified polysiloxane compound, comprising the step of reacting a silanol-modified polysiloxane compound having the general formula (1): 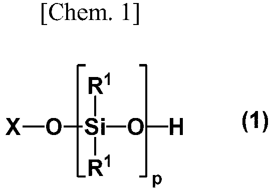 wherein R¹ is each independently a C₁-C₁₀ substituted or unsubstituted monovalent hydrocarbon group, X is hydrogen or R¹₃Si wherein R¹ is as defined above, and p is an integer of 1 to 1,000, with an alkoxysilyl-containing cyclic silazane compound having the general formula (2): 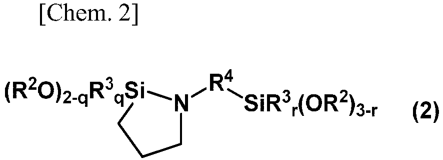 wherein R² and R³ are each independently a C₁-C₆ unsubstituted monovalent hydrocarbon group, R⁴ is a C₁-C₂₀ divalent hydrocarbon group which may contain sulfur, silicon, ester bond or urea bond, q is 0 or 1, and r is 0, 1 or 2,
the alkoxysilylalkylaminopropyl-modified polysiloxane compound having the general formula (3): 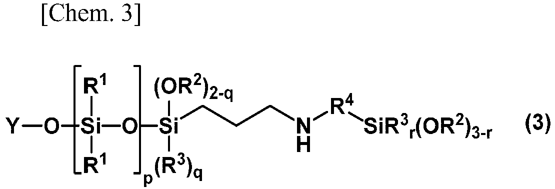 wherein R¹ to R⁴, p, q, and r are as defined above, and Y is a substituent group having the general formula (4): 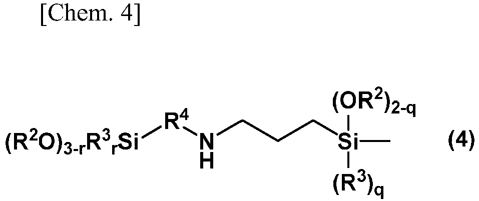 wherein R² to R⁴, q, and r are as defined above, or R¹₃Si wherein R¹ is as defined above.

2. The method for producing an alkoxysilylalkylaminopropyl-modified polysiloxane compound according to claim 1 wherein the silanol-modified polysiloxane compound having formula (1) and the alkoxysilyl-containing cyclic silazane compound having formula (2) are combined in such a ratio that 1.0 to 1.2 moles of the alkoxysilyl-containing cyclic silazane compound is present per mole of silanol group in the silanol-modified polysiloxane compound.

## Patentansprüche

1. Verfahren zur Herstellung einer Alkoxysilylalkylaminopropyl-modifizierten Polysiloxan-Verbindung, das den Schritt des Umsetzens einer Silanol-modifizierten Polysiloxan-Verbindung der allgemeinen Formel (1): 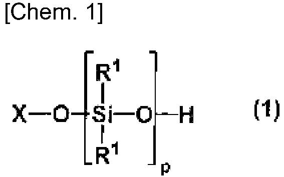 worin R¹ jeweils unabhängig eine substituierte oder unsubstituierte einwertige C₁₋₁₀-Kohlen-wasserstoffgruppe ist, X Wasserstoff oder R¹₃Si ist, worin R¹ wie oben definiert ist, und p eine ganze Zahl von 1 bis 1.000 ist,
mit einer Alkoxysilyl-hältigen zyklischen Silazan-Verbindung der allgemeinen Formel (2) umfasst: 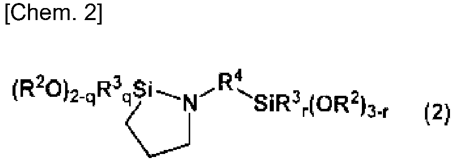 worin R² und R³ jeweils unabhängig eine unsubstituierte einwertige C₁₋₆-Kohlenwasserstoffgruppe sind, R⁴ eine zweiwertige C₁₋₂₀-Kohlenwasserstoffgruppe ist, die gegebenenfalls Schwefel, Silicium, eine Esterbindung oder eine Harnstoffbindung enthält, q = 0 oder 1 ist und r = 0, 1 oder 2 ist,
wobei die Alkoxysilylalkylaminopropyl-modifizierte Polysiloxan-Verbindung die allgemeine Formel (3) aufweist: 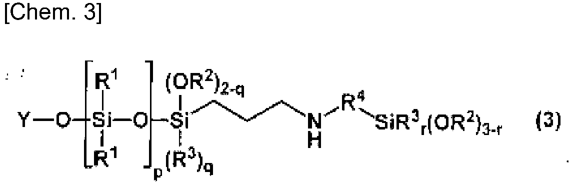 worin R¹ bis R⁴, p, q und r wie oben definiert sind und Y eine Substituentengruppe ist, welche die allgemeine Formel (4) aufweist: 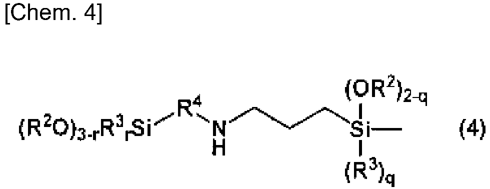 worin R² bis R⁴, q und r wie oben definiert oder R¹₃Si sind, worin R¹ wie oben definiert ist.

2. Verfahren zur Herstellung einer Alkoxysilylalkylaminopropyl-modifizierten Polysiloxan-Verbindung nach Anspruch 1, wobei die Silanol-modifizierte Polysiloxan-Verbindung der Formel (1) und die Alkoxysilyl-hältige zyklische Silazan-Verbindung der Formel (2) in einem solchen Verhältnis kombiniert werden, dass 1,0 bis 1,2 Mol der Alkoxysilyl-hältigen zyklischen Silazan-Verbindung pro Mol Silanolgruppen in der Silanol-modifizierten Polysiloxan-Verbindung vorhanden sind.

## Revendications

1. Procédé de production d'un composé de polysiloxane modifié par alcoxysilyle alkylaminopropyle, comprenant l'étape consistant à faire réagir un composé de polysiloxane modifié par silanol présentant la formule générale (1) : 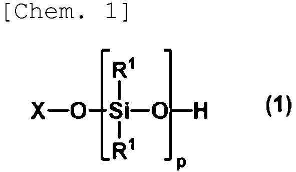 dans laquelle chaque R¹ est indépendamment un groupe hydrocarboné monovalent substitué ou non substitué en C₁-C₁₀, X est de l'hydrogène ou R¹₃Si où R¹ est tel que défini ci-dessus, et p est un nombre entier de 1 à 1 000, avec un composé de silazane cyclique contenant un alcoxysilyle présentant la formule générale (2) : 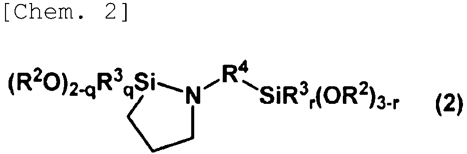 dans laquelle R² et R³ sont chacun indépendamment un groupe hydrocarboné monovalent non substitué en C₁-C₆, R⁴ est un groupe hydrocarboné divalent en C₁-C₂₀ qui peut contenir du soufre, du silicium, une liaison ester ou une liaison urée, q est 0 ou 1, et r est 0, 1 ou 2,
le composé de polysiloxane modifié par un alcoxysilyle alkylaminopropyle présentant la formule générale (3) : 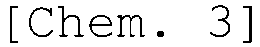 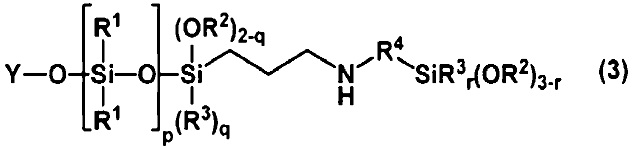 dans laquelle R¹ à R⁴, p, q et r sont tels que définis ci-dessus, et Y est un groupe substituant présentant la formule générale (4) : 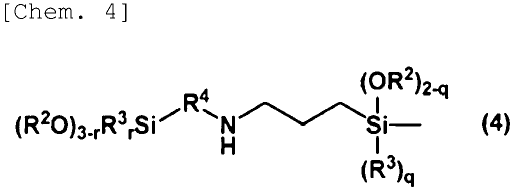 dans laquelle R² à R⁴, q et r sont tels que définis ci-dessus, ou R¹₃Si où R¹ est tel que défini ci-dessus.

2. Procédé de production d'un composé de polysiloxane modifié par un alcoxysilyle alkylaminopropyle selon la revendication 1, dans lequel le composé de polysiloxane modifié par un silanol présentant la formule (1) et le composé de silazane cyclique contenant un alcoxysilyle présentant la formule (2) sont combinés selon un rapport tel que 1,0 à 1,2 mole du composé de silazane cyclique contenant un alcoxysilyle est présente par mole de groupe silanol dans le composé de polysiloxane modifié par un silanol.
